# EUROPEAN PATENT APPLICATION

(11) **EP 2 667 581 A1**
(43) Date of publication of application: **27.11.2013**
(21) Application number: 11856005.1
(22) Date of filing: 21.12.2011
(51) Int. Cl.: H04M 11/00, H04W 4/02, H04W 84/12, H04W 88/18

(54) **SYSTEM FOR DISTRIBUTING LOCAL INFORMATION**

(30) Priority: 20.01.2011 JP 2011010270
(71) Applicant: BeMap, Inc., Chiyoda-ku, Tokyo 101-0047 (JP)
(72) Inventor: SUDA, Hiroshi, Chiyoda-ku Tokyo 1010047 (JP); MITANI, Takuya, Tokyo 101-0047 (JP)
(74) Representative: Dobler, Markus
(86) International application number: PCT/JP2011/079604
(87) International publication number: WO 2012/098802

(57) **Abstract**

A sensing device (2) senses a frame of a data link layer transmitted from the wireless LAN interface of a mobile phone (1) without establishing connection with the mobile phone (1), detects equipment identification information of the mobile phone (1) from the frame, and transmits the detected equipment identification information to a server device (3). The server device (3) then selects delivery data based on identification information of the sensing device (2) that has detected the equipment identifier, and transmits the selected delivery data via a mobile phone network to the mobile phone (1) corresponding to the equipment identification information.

## Description

### TECHNICAL FIELD

The present invention relates to local information delivery systems.

### BACKGROUND ART

With the development of public wireless LANs in recent years, systems that transmit delivery data using a public wireless LANs for advertisements to user terminals have been proposed (for example, see Patent Document 1).

In such systems, a user subscribes in advance a connection service for a public wireless LAN, and registers his/her authentication information (SSID (Service Set ID), password, WEP (Wi-Fi Protected Access) key, etc.) in his/her user terminal. Thereby, the user terminal is available to be connected with an access point of the connection service for the public wireless LAN. When the user terminal is connected with the access point of the connection service for the public wireless LAN, delivery data is transmitted to the user terminal via the public wireless LAN.

### RELATED ART DOCUMENTS

### PATENT DOCUMENTS

Patent Document 1: Japanese Unexamined Patent Application Publication No. 2004-280652

### SUMMARY OF THE INVENTION

However, in the systems described above, only after the user terminal is connected with the access point of the connection service for the public wireless LAN, the delivery data cannot be transmitted to the user terminal. This requires that the user subscribes in advance the connection service for the public wireless LAN as a premise, and, unless the user terminal is connected with the access point to the public wireless LAN, it is difficult to transmit the delivery data to the user terminal.

The present invention has been made in view of the above problem. One object of the present invention is to obtain a local information delivery system that can provide a user with local information without connection to an access point of a public wireless LAN.

In order to solve the above problem, the present invention is configured as follows.

A local information delivery system according to the present invention includes one or more mobile phones, one or more sensing devices, and a server device. The mobile phone has a wireless LAN interface. The sensing device senses a frame of a data link layer transmitted from the wireless LAN interface of the mobile phone, detects equipment identification information of the mobile phone from the frame, and transmits the detected equipment identification information to the server device, without establishing connection with the mobile phone. The server device selects delivery data based on identification information of the sensing device that has detected the equipment identifier, and transmits the selected delivery data to the mobile phone corresponding to the equipment identification information via a mobile phone network.

Thereby, it is possible to provide the user with local information without connection to the access point of the public wireless LAN.

Further, in any one of the local information delivery systems described above, the local information delivery system according to the present invention may be configured as follows. In this case, the sensing device senses a search frame for searching a communication partner that is transmitted from the wireless LAN interface of the mobile phone, detects equipment identification information of the mobile phone from the search frame, and transmits the detected equipment identification information to the server device.

Further, in any one of the local information delivery systems described above, the local information delivery system according to the present invention may be configured as follows. In this case, the wireless LAN interface conforms to the IEEE802.11 standard, a search signal is a probe request, and the equipment identifier is a MAC address of the wireless LAN interface.

Further, in any one of the local information delivery systems described above, the local information delivery system according to the present invention may be configured as follows. In this case, the delivery data includes guidance information around an installation location of the sensing device, and the server device selects the delivery data associated in advance with the identification information of the sensing device that has detected the equipment identifier.

Further, in any one of the local information delivery systems, the local information delivery system according to the present invention may be configured as follows. In this case, the local information delivery system further includes a digital signage that receives display data, and displays advertisements based on the display data. The sensing device is installed in the vicinity of the digital signage, and the server device transmits the display data to the digital signage, and transmits the delivery data associated with the display data transmitted to the digital signage, to the mobile phone of which equipment identification information has been detected by the sensing device installed in the vicinity of the digital signage.

Thereby, it is possible to provide local information that links with advertisements by the digital signage to the user near the digital signage.

Further, in any one of the local information delivery systems described above, the local information delivery system according to the present invention may be configured as follows. In this case, the sensing device, when detecting equipment identification information of the plurality of mobile phones within a predetermined period, transmits the equipment identification information of the plurality of mobile phones collectively to the server device.

Thereby, even if a number of mobile phones are detected in a short time by the sensing device, increase in traffic to the server device from the sensing device can be suppressed.

Further, in any one of the local information delivery systems described above, the local information delivery system according to the present invention may be configured as follows. In this case, the sensing device detects electric field intensity of radio waves from the mobile phone upon sensing the frame, and transmits information on the electric field intensity to the server device. Then, the server device selects the delivery data based on the electric field intensity information.

Thereby, since the electric field intensity detected by the sensing device is changed in accordance with a position of the user from the sensing device, it is possible to select delivery data corresponding to the position of the user.

Further, in any one of the local information delivery systems described above, the local information delivery system according to the present invention may be configured as follows. In this case, if the server device, after a predetermined time has elapsed since receiving the equipment identification information from the sensing device in a predetermined area, receives the same equipment identification information from the same or a different sensing device in the area, the server device transmits to the mobile phone via the mobile phone network delivery data different from delivery data transmitted when receiving the equipment identification information first.

Thereby, when the position of the user is not moving for a long time, it is assumed that the user has enjoyed the service at the installation position of the sensing device. It is possible to provide the user who has enjoyed the service with specific local information.

As above, according to the present invention, local information (area information, store specific information, etc.) can be provided to the user in the local information delivery system, without being connected with the access point of the public wireless LAN.

### BRIEF DESCRIPTION OF THE DRAWINGS

FIG. 1 is a block diagram showing a configuration of a local information delivery system according to an embodiment of the present invention.
FIG. 2 is a block diagram showing a configuration of a mobile phone in FIG 1.
FIG. 3 is a block diagram showing a configuration of a sensing device in FIG 1.
FIG. 4 is a block diagram showing a configuration of a server device in FIG. 1.

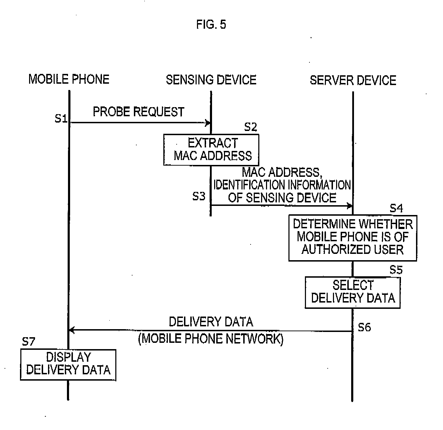

FIG. 5 is a sequence diagram for explaining delivery of local information by the system shown in FIG 1.

### MODE FOR CARRYING OUT THE INVENTION

Hereinafter, an embodiment of the present invention will be described by way of drawings.

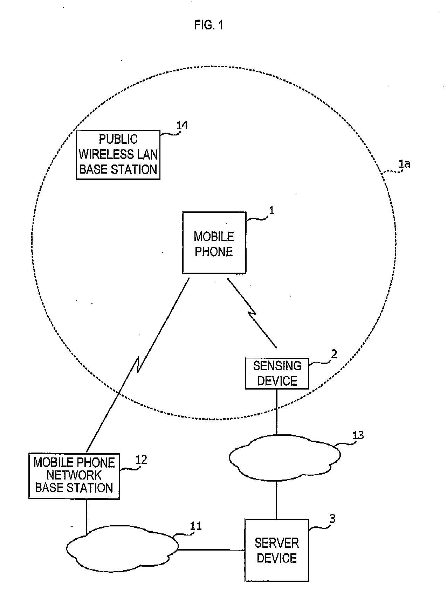

FIG. 1 is a block diagram showing a configuration of a local information delivery system according to an embodiment of the present invention.

In the system shown in FIG. 1, a mobile phone 1 is a terminal device that connects with a base station 12 of a mobile phone network 11, and allows calls and data communication via the mobile phone network 11. Further, the mobile phone 1 has a wireless LAN interface. For example, the mobile phone 1 is a smart phone or the like. In FIG. 1, only one mobile phone 1 is shown, but a plurality of mobile phones 1 may be present in the system. Because the mobile phone 1 is carried by a user, the mobile phone 1 moves with the user.

A sensing device 2, when entering a communicable range 1a of the wireless LAN interface of the mobile phone 1, senses a frame of a data link layer transmitted from the wireless LAN interface, without establishing connection with the mobile phone 1, detects equipment identification information of the mobile phone from the frame, and transmits the detected equipment identification information to a server device 3. In this embodiment, the frame of the data link layer that conforms to the IEEE802.11 standard is sensed.

For example, the sensing device 2 senses a search frame for searching a communication partner that is broadcast from the wireless LAN interface of the mobile phone 1, and detects equipment identification information of the mobile phone 1 from the search frame.

In this system, it is not particularly necessary for the mobile phone 1 to connect with a public wireless LAN base station 14. For example, the sensing device 2, when the mobile phone 1 is connected with the public wireless LAN base station 14, intercepts a data frame transmitted and received between the mobile phone 1 and the public wireless LAN base station 14, and detects equipment identification information of the mobile phone 1 from the data frame. Because one of all channels defined by wireless LAN communication standards is used in a fixed manner between the mobile phone 1 and the public wireless LAN base station 14, it is preferable that the sensing device 2 monitors frames of all the channels when sensing a data frame. However, even in the case of sensing a data frame, the sensing device 2 may be configured to monitor only frames of some channels.

The sensing device 2 is installed at a location where it is desired to provide users with information such as guidance information. In FIG. 1, only one sensing device 2 is shown, but a plurality of sensing devices 2 may be present in the system. Further, the sensing device 2 transmits the detected equipment identification information of the mobile phone 1 to the server device 3 via Internet 13, together with identification information unique to the sensing device 2.

The server device 3 receives the equipment identifier of the mobile phone 1 detected by the sensing device 2 and identification information of the sensing device 2 from the sensing device 2 via the Internet 13, selects delivery data based on the identification information of the sensing device 2, and transmits the selected delivery data to the mobile phone 1 corresponding to the equipment identification information via the mobile phone network 11.

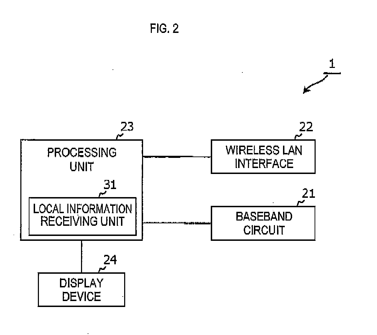

FIG. 2 is a block diagram showing a configuration of the mobile phone 1 in FIG. 1.

The mobile phone 1 includes a baseband circuit 21, a wireless LAN interface 22, a processing unit 23, and a display device 24.

The baseband circuit 21 is a communication circuit that communicates with the base station 12 of the mobile phone network 11. If the mobile phone 1 is in an area of mobile phone network 11, communication through the mobile phone network 11 is possible at all times by the baseband circuit 21.

The wireless LAN interface 22 is a communication circuit that conforms to the prescribed wireless LAN standards. In the present embodiment, the wireless LAN interface 22 is a communication circuit that conforms to the IEEE802.11 standard, such as IEEE802.11b or IEEE802.11g. The wireless LAN interface 22 transmits and receives a frame of the data link layer to and from the public wireless LAN base station 14, operates in an infrastructure mode, and, in order to search a wireless LAN base station by active scanning, repeatedly broadcasts a probe request periodically.

The processing unit 23 has a CPU (Central Processing Unit), a ROM (Read Only Memory), a RAM (Random Access Memory), etc., and loads from a (not shown) storage device or the ROM to the RAM and runs programs so as to implement various processing units. In this embodiment, a local information receiving unit 31 is implemented in the processing unit 23. The local information receiving unit 31 receives delivery data through the mobile phone network 11 via the baseband circuit 21.

A display device 24 is a device such as a liquid crystal display disposed in a housing of the mobile phone 1, and displays delivery data.

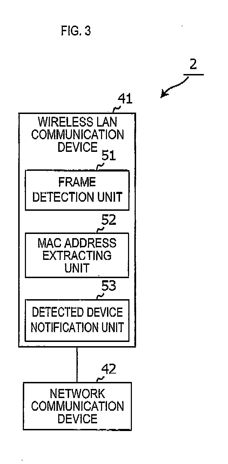

FIG. 3 is a block diagram showing a configuration of the sensing device 2 in FIG. 1.

The sensing device 2 includes a wireless LAN communication device 41, and a network communication, device 42.

The wireless LAN communication device 41 receives radio signals transmitted from the wireless LAN interface 22 of the mobile phone 1. The wireless LAN communication device 41 has a frame detection unit 51, a MAC address extracting unit 52, and a detected device notification unit 53.

The frame detection unit 51 detects frames of the data link layer such as a frame for probe request, a data frame, etc. from the radio signals transmitted from the wireless LAN interface 22 of the mobile phone 1.

The MAC address extracting unit 52 extracts the equipment identification information of the mobile phone 1 from the frame detected by the frame detection unit 51. In this embodiment, from a frame such as for probe request, a source MAC (Media Access Control) address is extracted as the equipment identification information unique to the source mobile phone 1.

The detected device notification unit 53 transmits the equipment identification information of the mobile phone 1 extracted by the MAC address extracting unit 52, together with the identification information of the sensing device 2, to the server device 3, using the network communication circuit 42.

The network communication device 42 is a device, such as a network interface, a modem, etc. that can communicate with the server device 3 via the Internet 13.

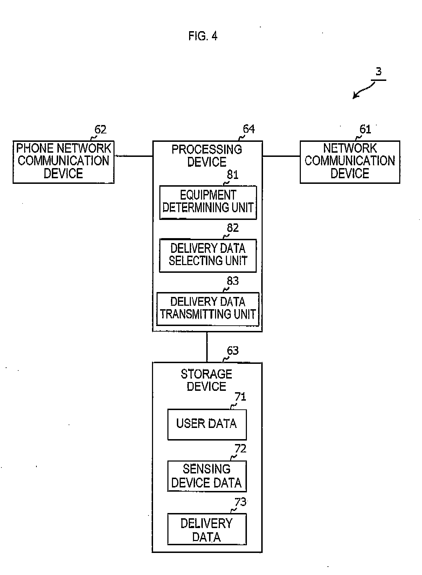

FIG. 4 is a block diagram showing a configuration of the server device 3 in FIG. 1.

The server device 3 includes a network communication device 61, a phone network communication device 62, a storage device 63, and a processing device 64.

The network communication device 61 is a device, such as a network interface, a modem, etc. that can communicate with the sensing device 2 via the Internet 13.

The phone network communication device 62 is a communication device, such as a modem, etc. that can be connected with the mobile phone network 11 via a public switched phone network, etc.

The storage device 63 is a mass storage device such as a hard disk drive, a nonvolatile semiconductor memory, a disk array, etc., and stores user data 71, sensing device data 72, delivery data 73, etc.

The user data 71 includes, for each authorized user, identification information (such as user ID, name, etc.) of the user, equipment identification information (MAC address, in this case) of the mobile phone 1 of the user, identification information (such as e-mail address of push e-mail services, phone number, etc.) of the mobile phone 1 of the user in the mobile phone network 11, and setting information of delivery data. The setting information includes a type of delivery data to be provided to the user. Depending on the type of delivery data, for example, data format (such as text format, image format, etc.) and a category of local information (such as store information, goods information, coupon information, etc.) are specified.

The sensing device data 72 includes, for each of the sensing devices 2, identification information of the sensing device 2, an installation position of the sensing device 2, identification information of delivery data associated with the sensing device 2, etc.

The delivery data 73 is stored in association with identification information (serial number, file name, area name, type of delivery data, etc.), and includes local information such as guidance information near the installation location of the sensing device 2.

The processing unit 64 includes a CPU, a ROM, a RAM, etc. The processing unit 64 loads from a (not shown) storage device, the storage device 63 or the ROM, etc. into the RAM and runs programs so as to implement various processing units. In this embodiment, an equipment determining unit 81, a delivery data selecting unit 82, and a delivery data transmitting unit 83 are implemented in the processing unit 64.

The equipment determining unit 81, with reference to the user data 71, determines whether or not the equipment identification information of the mobile phone 1 received from the sensing device 2 is the equipment identification information of the mobile phone 1 of the authorized user.

The delivery data selecting unit 82, with reference to the sensing device data 72, selects the delivery data 73 associated with the identification information of the sensing device 2 received from the sensing device 2, together with the equipment identification information determined to be the equipment identification information of the mobile phone 1 of the authorized user by the equipment determining unit 81.

In this case, the delivery data selecting unit 82 may select only the delivery data 73 of the type specified by the setting information in the user data 71, among the delivery data 73 associated with the identification information of the sensing device 2.

The delivery data transmitting unit 88, with reference to the user data 71, specifies the identification information in the mobile phone network 11 corresponding to the equipment identification information of the mobile phone 1, and transmits the delivery data 73 selected by the delivery data selecting unit 82 to the mobile phone 1 specified by the identification information in the specified mobile phone network 11, by a predetermined communication method. Examples of the predetermined communication method are a push e-mail service that uses an e-mail address associated with the mobile phone 1, a short message service that uses a phone number of the mobile phone 1, etc. The delivery data transmitting unit 83 transmits the delivery data 73 using the network communication device 61, in a case of the push e-mail service, and transmits the delivery data 73 using the phone network communication device 62, in a case of the short message service.

Now, delivery of local information by the above described system will be explained.

FIG. 6 is a sequence diagram that explains delivery of local information by the system shown in FIG. 1. Here, an example will be described in which the sensing device 2 detects a probe request frame that is broadcast from the mobile phone 1. It should be noted that, also in a case of intercepting a frame transmitted and received between the mobile phone 1 and the public wireless LAN base station 14, a MAC address of the mobile phone 1 is detected from the intercepted frame in the same manner.

The wireless LAN interface 22 of the mobile phone 1 transmits a probe request periodically (step S1). The mobile phone 1 is carried by the user and moves.

When the sensing device 2 exists in the communicable range 1a of the mobile phone 1, the frame detection unit 51 detects a frame of the probe request, and the MAC address extracting section 52 extracts the MAC address of the mobile phone 1 from the frame of the probe request, in the sensing device 2 (step S2). The detected device notification unit 53 transmits the MAC address, together with the identification information of the sensing device 2, to the server device 3 using network communication circuit 42 (step S3).

In the server device 3, the equipment determining unit 81, using a network communication device 61, receives the MAC address and the identification information of the sensing device 2, and, with reference to the user data 71, determines whether or not the MAC address is the MAC address of the mobile phone 1 of the authorized user (step S4). Here, if the MAC address is not the MAC address of the mobile phone 1 of the authorized user, the equipment determining unit 81 discards the received MAC address.

On the other hand, when the received MAC address is the MAC address of the mobile phone 1 of the authorized user, the delivery data selecting unit 82, with reference to the detection device data 72, selects the delivery data 73 associated with the identification information of the sensing device 2 received with the MAC address (step S6).

When the delivery data 73 is selected, the delivery data transmitting unit 83, with reference to the user data 71, specifies the identification information in the mobile phone network 11 corresponding to the equipment identification information of the mobile phone 1, and transmits the selected delivery data 73 to the mobile phone 1 specified by the specified identification information in the mobile phone network 11 by a predetermined communication method (step S6).

The delivery data 73, since transmitted through the mobile phone network 11, is immediately received by the mobile phone 1, and the user is notified of receipt of the delivery data 73 by screen display or sounds.

In the mobile phone 1, when the local information receiving unit 31 receives the delivery data and the user performs a predetermined operation for the mobile phone 1, or as soon as the delivery data is received, the delivery data (local information) is displayed on the display device 24 (step S7).

As above, according to the above embodiment, the sensing device 2, without establishing connection with the mobile phone 1, senses the frame of the data link layer transmitted from the wireless LAN interface 22 of the mobile phone 1, detects the equipment identification information of the mobile phone 1 from the frame, and transmits the detected equipment identification information to the server device 3. Then, the server device 3 selects the delivery data 73 based on the identification information of the sensing device 2 that has detected the equipment identifier, and transmits the selected delivery data 73 to the mobile phone 1 corresponding to the equipment identification information, via the mobile phone network 11.

Thereby, it is possible to provide the user with local information without being connected with the access point of a public wireless LAN.

It should be noted that the embodiment described above is a preferred embodiment of the present invention and the present invention is not to be limited thereto, and various modifications and changes are possible without departing from the scope of the present invention.

For example, the system shown in the above embodiment may further include a digital signage. The digital signage has a communication device and a display device, receives display data via the Internet 13, etc. through the communication device, and displays advertisements based on the display data on the display device. The sensing device 2 is installed in the vicinity of the digital signage, and the server device 3 transmits the display data to the digital signage, and also transmits the delivery data that is associated with the display data transmitted to the digital signage, to the mobile phone 1 of which equipment identification information is detected by the sensing device 2 provided in the vicinity of digital signage. Thereby, it is possible to transmit the delivery data 73 that is linked to the advertisements by the digital signage to the mobile phone 1 of the user who is near the digital signage.

Further, in the above embodiment, the sensing device 2 may be configured to transmit the equipment identification information of the plurality of mobile phones 1 collectively to the server device 3, when the equipment identification information of the plurality of mobile phones 1 is detected within a predetermined time period. In this way, even if a number of mobile phones 1 are detected in a short time in the sensing device 2, increase in traffic to the server device 3 from the sensing device 2 is suppressed.

Further, in the above embodiment, the sensing device 2 may be configured so as not to transmit the equipment identification information to the server device 3, even if the same equipment identification information is detected for a predetermined time after detection of the detected equipment identification information. In this way, increase in traffic to the server device 3 from the sensing device 2 is suppressed.

Further, in the above embodiment, the sensing device 2 may be configured so as not to transmit the equipment identification information to the server device 3 even if the same equipment identification information is detected, until the equipment identification information is next detected after the equipment identification information is no longer detected after detection of the detected equipment identification information. In this way, increase in traffic to the server device 3 from the sensing device 2 is suppressed.

Further, in the above embodiment, the server device 3, when selecting the same delivery data in a case where the same equipment identification information has been detected more than once by the plurality of sensing devices 2, may transmit the delivery data only once to the mobile phone 1 having the equipment identification information.

Further, in the above embodiment, the push e-mail service and the short message service are given as examples upon transmitting the delivery data to the mobile phone 1 via the mobile phone network 11 from the server device 3. However, the delivery data may be transmitted to the mobile phone 1 from the server device 3 via the mobile phone network 11 by a communication method such as push notification (Push Notification) provided by Apple and Microsoft, and cloud-to-device messaging (Cloud to Device Messaging) provided by Google. In this case, an application that receives delivery data is pre-installed on the mobile phone 1. When there is delivery data to be received by the mobile phone 1, the application is activated, and the delivery data is received by the application.

Further, in the above embodiment, the sensing device 2 may detect electric field intensity of radio waves from the mobile phone 1 when sensing a frame from the mobile phone 1 in a not shown wireless communication circuit in the wireless LAN communication device 41, and may transmit to the server device 3 the electric field intensity information. The server device 3 may receive the electric field intensity information with the equipment identification information, and may select the delivery data based on the electric field intensity information.

In this way, for example, if the sensing device 2 is installed in a store, it is possible to estimate whether a position of the user is in the store or outside the store. It is possible to provide different local information to each of the user in the store and the user outside the store. For example, a menu listing recommended dishes, etc. is provided to the user estimated to be in the store, and a time limit coupon which is available for a limited period is provided to the user estimated to be outside the store.

Further, in the above embodiment, one or more sensing device 2 may be placed in a predetermined area, and installation area information indicating the area where the sensing device 2 is installed may be included in the sensing device data 72. The server device 3, if receiving the same identification information from the same or a different sensing device 2 in the area, after a predetermined time (one hour, for example) has elapsed from receiving the equipment identification information from the sensing device 2 in that area, may transmit delivery data different from the delivery data transmitted when first receiving the equipment identification information to the mobile phone 3 via the mobile phone network 11.

In this way, for example, if the sensing device is installed in the store, it is possible to sense that the user has enjoyed the service of the store, and can provide specific local information (e.g., coupons available for the next use of the service, etc.) to the user who has enjoyed the service.

### Industrial applicability

The present invention is applicable, for example, to delivery of local guidance information of the area where the user is located.

## Claims

1. A local information delivery system comprising:
one or more mobile phones that has a wireless LAN interface;
one or more sensing devices that senses a frame of a data link layer transmitted from the wireless LAN interface of the mobile phone, detects equipment identification information of the mobile phone from the frame, and transmits the detected equipment identification information to a server device, without establishing connection with the mobile phone; and
a server device that selects delivery data based on identification information of the sensing device that has detected the equipment identifier, and transmits the selected delivery data to the mobile phone corresponding to the equipment identification information via a mobile phone network.

2. The local information delivery system according to claim 1,
wherein the sensing device detects a search frame for searching a communication partner that is transmitted from the wireless LAN interface of the mobile phone, detects equipment identification information of the mobile phone from the search frame, and transmits the detected equipment identification information to the server device

3. The local information delivery system according to claim 2,
wherein the wireless LAN interface conforms to the IEEE802.11 standard, the search signal is a probe request, and the equipment identifier is a MAC address of the wireless LAN interface.

4. The local information delivery system according to any one of claims 1 to 3,
the delivery data includes guidance information around an installation location of the sensing device, and the server device selects the delivery data associated in advance with the identification information of the sensing device that has detected the equipment identifier.

5. The local information delivery system according to any one of claims 1 to 4, further comprising
a digital signage that receives display data, and displays advertisements based on the display data,
wherein the sensing device is installed in the vicinity of the digital signage, and
the server device transmits the display data to the digital signage, and transmits the delivery data associated with the display data transmitted to the digital signage, to the mobile phone of which equipment identification information has been detected by the sensing device installed in the vicinity of the digital signage.

6. The local information delivery system according to any one of claims 1 to 5,
wherein the sensing device, when detecting equipment identification information of the plurality of mobile phones within a predetermined period, transmits the equipment identification information of the plurality of mobile phones collectively to the server device.

7. The local information delivery system according to any one of claims 1 to 6,
wherein the sensing device detects electric field intensity of radio waves from the mobile phone upon detecting the frame, and transmits information on the electric field intensity to the server device, and
the server device selects the delivery data based on the electric field intensity information.

8. The local information delivery system according to any one of claims 1 to 7,
wherein, if the server device, after a predetermined time has elapsed since receiving the equipment identification information from the sensing device in a predetermined area, receives the same equipment identification information from the same or a different sensing device in the area, the server device transmits to the mobile phone via the mobile phone network delivery data different from delivery data transmitted when receiving the equipment identification information first.
